# EUROPÄISCHE PATENTSCHRIFT

(11) **EP 2 347 268 B1**
(45) Veröffentlichungstag und Bekanntmachung des Hinweises auf die Patenterteilung: **19.08.2020**
(21) Anmeldenummer: 09759925.2
(22) Anmeldetag: 16.11.2009
(51) Int. Cl.: G01N 35/10, B01L 3/02

(54) **AUTOMATISIERTE ANALYSEVORRICHTUNG MIT EINER AUTOMATISCHEN PIPETTIERVORRICHTUNG UND MIT EINER PIPETTIERNADELSPÜLSTATION**
AUTOMATED ANALYSIS DEVICE WITH AN AUTOMATIC PIPETTING DEVICE AND A PIPETTING NEEDLE RINSING STATION
DISPOSITIF D ANALYSE AUTOMATISÉ COMPRENANT UN DISPOSITIF DE PIPETAGE AUTOMATISÉ ET UNE STATION DE RINÇAGE DE L AIGUILLE DE PIPETAGE

(30) Priorität: 18.11.2008 DE 102008058064
(43) Veröffentlichungstag der Anmeldung: 27.07.2011
(73) Patentinhaber: DiaSys Technologies Sarl, 34790 Grabels (FR)
(72) Erfinder: SCHENK, Roland, 67281 Kirchheim (DE)
(74) Vertreter: WSL Patentanwälte Partnerschaft mbB
(86) Internationale Anmeldenummer: PCT/EP2009/065251
(87) Internationale Veröffentlichungsnummer: WO 2010/057860

(56) Entgegenhaltungen:
- EP-A2- 0 251 087
- EP-A2- 0 411 620
- EP-A2- 0 825 446
- WO-A1-97/03766
- JP-A- 62 242 858
- US-A- 5 061 450
- US-A- 5 133 373

## Beschreibung

Die vorliegende Erfindung betrifft eine automatische Pipettiervorrichtung mit einer Spülstation zum Spülen der Pipettiernadel der Pipettiervorrichtung, wobei die Spülstation wenigstens einen nach oben offenen Spülnapf umfasst, der eine Höhe aufweist, die mindestens einer vorgegebenen maximalen Eintauchtiefe (T) der Pipettiernadel in eine Proben- oder Reagenzienflüssigkeit während eines automatischen Pipettiervorgangs entspricht, dessen Innenumfang größer als der Außenumfang der Pipettiernadel ist und der an seinem unteren Ende einen Spülnapfboden und einen in dem Spülnapfboden oder unmittelbar darüber angeordneten Spülnapfablauf aufweist. Darüber hinaus betrifft die vorliegende Erfindung eine automatisierte Analysevorrichtung mit einer solchen automatischen Pipettiervorrichtung und ein Verfahren zum Spülen einer Pipettiernadel einer solchen automatischen Pipettiervorrichtung.

Im Rahmen der zunehmenden Automatisierung auf dem Gebiet der medizinischen und veterinärmedizinischen Diagnostik wurden u.a. Vorrichtungen für die automatisierte Analyse von Flüssigkeiten, sogenannte Analysatoren, entwickelt, die die verschiedenen für die Durchführung einer Analyse erforderlichen Reagenzien aus Reagenzienbehältern entnehmen und mit einer Probe zum Zwecke der Durchführung der Analyse in einem Reaktionsgefäß vereinigen können. Hierfür weisen die Analysatoren häufig ein Karussell auf, in dem entweder Aufnahmebereiche für Reagenzienbehälter oder Aufnahmebereiche für Probenbehälter vorgesehen sind. In besonderen Analysatorenkarussells sind sowohl Aufnahmebereiche für Reagenzienbehälter als auch Aufnahmebereiche für Probenbehälter vorgesehen. Solche Karussells werden üblicherweise von einer in dem Analysatore vorgesehenen Antriebsvorrichtung zur Ausführung einer Drehbewebung des Karussells angetrieben.

Die Entnahme von Reagenz bzw. Probe und das Überführen in ein Reaktionsgefäß wird üblicherweise von einer automatischen Pipettiervorrichtung vorgenommen. Eine solche automatische Pipettiervorrichtung umfasst in der Regel einen Pipettierarm, an dem eine Pipettiernadel senkrecht angeordnet ist, die mit einer Pumpeinheit verbunden ist, mit der eine Flüssigkeit in die Pipettiernadel aufgezogen und aus der Pipettiernadel auch wieder ausgestoßen werden kann. Ein solcher Pipettierarm ist in der Regel so ausgestaltet, dass mit dem Pipettierarm die Pipettiernadel über einen Arbeitsbereich bewegt werden kann, in welchem Arbeitsbereich die Reagenzienbehälter, Probenbehälter und/oder Reaktionsgefäße (z. B. Küvetten) stationär angeordnet sind oder durch z. B. ein Karussell vorübergehend bereitgestellt werden und in die die Pipettiernadel eingetaucht werden kann.

Es gibt schwenkbare Pipettierarme, durch deren eines Ende eine Rotationsachse verläuft, um die sich das andere Ende des Pipettierarms auf einer Kreisbahn bewegen kann. Alternativ hierzu gibt es auch Pipettierarme, die sowohl in einer Richtung X als auch in einer senkrecht dazu angeordneten Richtung Y auf einer Ebene im Arbeitsbereich des Pipettierarms verfahrbar sind.

Pipettierarme können an Hubsäulen angeordnet sein, mit denen sie senkrecht zur Grundfläche des Arbeitsbereichs in der Arbeitshöhe verstellbar sind, um beispielsweise die Pipettiernadel über die in dem Arbeitsbereich angeordneten Flüssigkeitsbehälter bewegen zu können und die Pipettiernadel in ausgewählte Flüssigkeitsbehälter von oben einführen zu können. Alternativ zur Höhenverstellbarkeit über eine Hubsäule kann ein Pipettierarm auch so gestaltet sein, dass die Pipettiernadel selbst am Pipettierarm höhenverstellbar angeordnet ist.

Zwischen den einzelnen Pipettiervorgängen ist es regelmäßig erforderlich, die Pipettiernadel der automatischen Pipettiervorrichtung innen und außen zu reinigen. Hierfür wird die Pipettiernadel meist in eine Spülflüssigkeit eingetaucht, wobei eine bestimmte Menge an Spülflüssigkeit in die Pipettiernadel aufgezogen wird. Anschließend wird die Pipettiernadel aus der Spülflüssigkeit herausgezogen und über einem Abfallbehälter bzw. einem Abfluss entleert und abtropfen gelassen bzw. abgestreift.

Üblicherweise enthalten Analysatoren außerdem eine Messvorrichtung zum Bestimmen einer physikalischen oder chemischen Größe eines in einem Reaktionsgefäß angesetzten Reaktionsgemisches. Das Reaktionsgefäß kann z. B. eine Küvette sein, die im Strahlengang eines in dem Analysator angeordneten Photometers angeordnet ist oder eingebracht werden kann.

Darüber hinaus umfassen Analysatoren in der Regel wenigstens eine Steuerungseinheit zum Steuern der Bewegungen des Pipettierarms, der Pumpeinheit, der Pipettiernadel, der Hubsäule und/oder des Karussells, sowie eine Datenverarbeitungsvorrichtung zum Einrichten und Ausführen eines Analysenprogramms sowie zum Verarbeiten und Ausgeben einer gemessenen physikalischen oder chemischen Größe.

Die Reinigung einer Pipettiernadel von innen ist durch das Hindurchpumpen einer Spülflüssigkeit in der Regel relativ unproblematisch. Schwieriger ist dagegen teilweise die Reinigung einer Pipettiernadel auf ihrer Außenseite. Manche Reagenzien und Proben sind relativ zähflüssig und tropfen daher nicht ohne weiteres von der Pipettiernadel ab. Außerdem lösen sich manche Stoffe schlecht in für Analysatoren geeigneten Spülflüssigkeiten. Noch andere Flüssigkeiten haften aus anderen Gründen stark an der Pipettiernadel und lassen sich nur schwer entfernen. Da auf dem Gebiet der medizinischen und veterinärmedizinischen Diagnostik mit sehr empfindlichen Tests gearbeitet wird, ist es zwingend erforderlich, darauf zu achten, dass die Reinigung der Pipettiernadel zwischen den Pipettiervorgängen so effektiv wie möglich erfolgt. Das Eintauchen einer Pipettiernadel in eine Spülflüssigkeit, wobei die Spülflüssigkeit in die Pipettiernadel aufgesaugt wird, und das anschließende Ausstoßen der Spülflüssigkeit durch die Pipettiernadel liefert auch in Verbindung mit einem Abstreifvorgang, bei dem Flüssigkeit vom Pipettiernadeläußeren abgestreift wird, nicht immer die gewünschte Effektivität.

Dokumente US5061450, WO9703766 und JPS62242858 werden als Stand der Technik angesehen.

Es besteht daher ein Bedarf nach einer Vorrichtung, mit der das Innere und das Äußere einer Pipettiernadel zwischen den Pipettiervorgängen effektiver gereinigt werden kann, als dies mit entsprechenden Vorrichtungen aus dem Stand der Technik möglich ist.

Es ist daher die Aufgabe der vorliegenden Erfindung, eine automatische Pipettiervorrichtung mit einer Spülstation zum Spülen der Pipettiernadel bereitzustellen, mit der mit wenig Aufwand und bei geringem Spülflüssigkeitsverbrauch schnell und effizient eine möglichst optimale innere und äußere Reinigung einer Pipettiernadel zwischen den Pipettiervorgängen erreicht werden kann.

Diese Aufgabe wird gelöst durch eine automatische Pipettiervorrichtung mit einer Spülstation der eingangs genannten Art, wobei bei einer gegebenen Förderrate (Volumen pro Zeit) einer bestimmten Spülflüssigkeit durch die Pipettiernadel in den Spülnapf der hydraulische Ablaufwiderstand des Spülnapfablaufs so gewählt ist, dass die Förderrate der Spülflüssigkeit größer als die Ablaufrate (Volumen pro Zeit) der Spülflüssigkeit durch den Spülnapfablauf ist, wobei der Spülnapf zusätzlich eine Ablaufkammer aufweist, die zwischen dem Spülnapfboden und dem hohlzylindrischen Abschnitt des Spülnapfes angeordnet ist, wobei die Ablaufkammer zum hohlzylindrischen Abschnitt des Spülnapfes hin einen Ablaufkammereinlass aufweist und nach unten hin eine Spülnapfablauföffnung, die gegenüber dem Ablaufkammereinlass so versetzt angeordnet ist, dass beim Ausstoßen der Spülflüssigkeit aus der Pipettiernadel der Spülflüssigkeitsstrahl nicht direkt in die Spülnapfablauföffnung gepresst wird und wobei der Spülnapf in oder über einer Auffangwanne angeordnet ist, wobei die Auffangwanne mit einem Abfluss für die Spülflüssigkeit ausgestattet ist, die aus der Spülnapfablauföffnung des wenigstens einen Spülnapfs oder über die Oberkante des Spülnapfs austritt.

Der hydraulische Ablaufwiderstand wird bestimmt durch die Beschaffenheit der inneren Oberfläche und die Geometrie, den Querschnitt und die Länge des Spülnapfablaufs.

Vorzugsweise ist der Querschnitt Q des Spülnapfablaufs so gewählt, dass bei einer gegebenen Förderrate (Volumen pro Zeit) einer bestimmten Spülflüssigkeit durch die Pipettiernadel in den Spülnapf und bei gegebener innerer Oberfläche, Geometrie und Länge des Spülnapfablaufs die Förderrate der Spülflüssigkeit größer ist als die Ablaufrate (Volumen pro Zeit) der Spülflüssigkeit durch den Spülnapfablauf.

Vorzugsweise beträgt die Förderrate von 500 µl/s bis 5000 µl/s. Besonders bevorzugt beträgt die Förderrate von 1000 µl/s bis 3000 µl/s.

Von dem Erfindungsgedanken umfasst sind auch solche Ausführungsformen, bei denen im Spülnapfboden mehr als eine Spülnapfablauföffnung vorgesehen sind. In diesen Fällen gelten die bevorzugten Eigenschaften im Hinblick auf den hydraulischen Ablaufwiderstand und innere Oberfläche, Geometrie und Länge des Spülnapfablaufs entsprechend für die Summe bzw. die Gesamtheit der Spülnapfablauföffnungen.

Vorzugsweise ist der wenigstens eine Spülnapf ein Hohlzylinder. Bei alternativen Ausführungsformen können jedoch auch andere Querschnitte des Spülnapfs vorteilhaft sein, z.B. ein viereckiger Querschnitt, ein sechseckiger oder ein achteckiger Querschnitt.

Zweckmäßigerweise ist das Verhältnis des Innenumfangs (UW) des Spülnapfs zu dem Außenumfang (UP) der Pipettiernadel so gewählt, dass bei hinreichender Gesamtfördermenge an Spülflüssigkeit die Spülflüssigkeit in den Bereich zwischen der Außenwand der Pipettiernadel und der Innenwand des Spülnapfs steigt. Wird eine entsprechende Menge an Spülflüssigkeit durch die Pipettiernadel in den Spülnapf ausgestoßen, erfolgt dadurch nicht nur eine Reinigung der Pipettiernadel von innen, sondern auch eine Reinigung der Pipettiernadel von außen.

Bei einer bevorzugten Ausführungsform der vorliegenden Erfindung liegt das Verhältnis UW/UP in einem Bereich von 1,5-5. Besonders bevorzugt liegt dieses Verhältnis in einem Bereich von 2-3. Insbesondere bevorzugt ist ein Verhältnis UW/UP von 3.

Bei einer weiteren bevorzugten Ausführungsform sind der hydraulische Ablaufwiderstand des Spülnapfablaufs oder das Verhältnis UW/UP und Q so gewählt, dass bei einer gegebenen Förderrate einer bestimmten Flüssigkeit durch die Pipettiernadel in den Spülnapf und bei hinreichender Gesamtfördermenge an Spülflüssigkeit in dem Bereich zwischen der Außenwand der Pipettiernadel und der Innenwand des Spülnapfs in der Spülflüssigkeit turbulente Strömung auftritt.

Zweckmäßigerweise sind die Verhältnisse so gewählt, dass die turbulente Strömung entlang der Pipettiernadel über die gesamte vorgegebene maximale Eintauchtiefe (T) erreicht wird. Noch bevorzugter tritt die turbulente Strömung bei hinreichender Gesamtfördermenge in der gesamten im Spülnapf enthaltenen Spülflüssigkeit auf.

Die turbulente Strömung hat den Vorteil, dass hiermit eine größere Reinigungswirkung erzielt wird als bei lediglich laminarer Strömung.

Bei besonders bevorzugten Ausführungsformen sind der hydraulische Ablaufwiderstand des Spülnapfablaufs oder das Verhältnis UW/UP und Q so gewählt, dass bei einer gegebenen Förderrate einer bestimmten Spülflüssigkeit in dem Bereich zwischen der Außenwand der Pipettiernadel und der Innenwand des Spülnapfs in der Spülflüssigkeit eine Reynolds-Zahl von mindestens 2 500 erreicht wird. Vorzugsweise sind der hydraulische Ablaufwiderstand des Spülnapfablaufs oder das Verhältnis UW/UP und Q so gewählt, dass bei einer gegebenen Förderrate einer bestimmten Spülflüssigkeit in dem Bereich zwischen der Außenwand der Pipettiernadel und der Innenwand des Spülnapfs in der Spülflüssigkeit eine Reynolds-Zahl von mindestens 100 000, vorzugsweise von mindestens 200 000 und besonders bevorzugt von mindestens 250 000 erreicht wird. Zweckmäßigerweise sind der hydraulische Ablaufwiderstand des Spülnapfablaufs oder das Verhältnis UW/UP und Q bei einer gegebenen Förderrate einer bestimmten Spülflüssigkeit so gewählt, dass die Reynolds-Zahl entlang der gesamten vorgegebenen maximalen Eintauchtiefe (T) der Pipettiernadel erreicht wird. Besonders bevorzugt wird die Reynolds-Zahl in der gesamten in dem Spülnapf enthaltenen Flüssigkeit erreicht.

Bei einer bevorzugten Ausführungsform beträgt der Außenumfang (UP) der Pipettiernadel 1 mm bis 4 mm. Vorzugsweise liegt der Außenumfang der Pipettiernadel in dem Bereich von 2 mm bis 3 mm. Wenn im Zusammenhang mit der vorliegenden Erfindung vom Außenumfang (UP) der Pipettiernadel gesprochen wird, ist damit der Außenumfang der Pipettiernadel in dem Bereich gemeint, der äußerlich zu reinigen ist. Die Länge dieses Bereiches entspricht wenigstens der maximalen Eintauchtiefe (T), die die Pipettiernadel in einer Proben- oder Reagenzienflüssigkeit während eines Analysendurchlaufs erreicht. Zweckmäßigerweise entspricht die Länge dieses Bereiches wenigstens der maximalen Strecke T_{W}(T_{W} = Abstand Pipettiernadelspitze zu Spülnapföffnung) während eines Spülvorgangs. Dementsprechend kann die Pipettiernadel außerhalb dieses Bereichs einen größeren Au-βenumfang haben.

Bei einer weiteren Ausführungsform der erfindungsgemäßen Pipettiervorrichtung liegt der Innenumfang (UW) des Spülnapfs in dem Bereich von 1,5 mm bis 15 mm. Vorzugsweise liegt der Innenumfang des Spülnapfs in dem Bereich von 4 mm bis 9 mm.

Grundsätzlich genügt es bei der Spülstation gemäß der vorliegenden Erfindung, lediglich einen Spülnapf vorzusehen. Vorzugsweise sind jedoch wenigstens zwei Spülnäpfe, die in unterschiedlichen Bereichen des Arbeitsbereichs des Pipettierarms der Pipettiervorrichtung angeordnet sein können, vorgesehen. Besonders bevorzugt sind die wenigstens zwei Spülnäpfe jedoch nebeneinander angeordnet, wobei die Spülnapföffnungen auf einer horizontalen Ebene liegen. Besonders bevorzugt sind Spülstationen, bei denen wenigstens drei in einer Reihe angeordnete Spülnäpfe vorgesehen sind, wobei die Spülnapföffnungen auf einer horizontalen Ebene liegen. Darüber hinaus können auch mehr als drei Spülnäpfe auf einer durch deren Kreismittelpunkte verlaufenden Gerade angeordnet sein, wobei die Spülnapföffnungen auf einer horizontalen Ebene liegen.

Im Falle eines Pipettierarms, der sowohl in X-Richtung als auch in einer senkrecht dazu angeordneten Richtung Y auf einer Ebene im Arbeitsbereich des Pipettierarms verfahrbar ist, sind die zwei oder mehr Spülnäpfe, die ihre Spülnapföffnungen im Arbeitsbereich des Pipettierarms auf einer gemeinsamen horizontalen Ebene haben, vorzugsweise so auf einer durch deren Kreismittelpunkte verlaufenden Gerade angeordnet, dass diese Gerade in einem Winkel zu einer auf die Ebene der Spülnapföffnungen projezierten Bahn, auf der sich die Pipettiernadel durch den Arbeitsbereich bewegt, verläuft.

Im Falle eines schwenkbaren Pipettierarms, durch dessen eines Ende eine Rotationsachse verläuft, um die sich das andere Ende, an dem die Pipettiernadel angeordnet ist, auf einer Kreisbahn bewegt, ist die auf der Ebene, auf der die Spülnapföffnungen liegen, verlaufende Gerade, auf der die Kreismittelpunkte der Spülnäpfe liegen, eine Tangente der auf die Ebene der Spülnapföffnungen projezierten Kreisbahn, auf der sich die Pipettiernadel durch den Arbeitsbereich bewegt oder eine parallel zu dieser Tangente auf der Ebene der Spülnapföffnungen verlaufende Gerade.

Bei einer Spülstationanordnung mit mehreren Spülnäpfen, die in einer Reihe angeordnet sind, sind der Innenumfang UW der Spülnäpfe und der Umfang der Spülnapföffnungen und der Winkel, mit der die Gerade, auf der die Kreismittelpunkte der Spülnäpfe liegen, eine auf die Ebene der Spülnapföffnungen projezierte Bahn, auf der sich die Pipettiernadel durch den Arbeitsbereich bewegt, schneidet, so gewählt, dass eine Pipettiernadel, deren Spitze sich nicht auf der angenommenen idealen Bahn bewegt, dennoch in einen der Spülnäpfe eingeführt werden kann, sofern sich die tatsächliche Bahn, auf der sich die Pipettiernadel bewegt, in dem Bereich zwischen den äußersten Punkten der beiden äußersten Spülnapföffnungen verläuft. Dies wird beispielsweise erreicht, indem die Spülnapföffnungen in der Bewegungsrichtung der Pipettiernadel hintereinander versetzt angeordnet sind, wobei eine Pipettiernadelspitze, deren Bewegungsbahn nicht über die erste Spülnapföffnung verläuft, in jedem Fall über eine zweite Spülnapföffung verläuft, sofern die tatsächliche Bahn, auf der sich die Pipettiernadel bewegt, in dem Bereich zwischen den äußersten Punkten der beiden äußersten Spülnapföffnungen verläuft.

Die erfindungsgemäße Pipettiervorrichtung weist eine Spülstation auf, bei der für die aus dem wenigstens einen Spülnapf aus dem Spülnapfablauf oder über die Oberkante der Spülnapfablauföffnung austretende Spülflüssigkeit eine Auffangwanne vorgesehen ist, in oder über der der Spülnapf oder die Spülnäpfe angeordnet ist/sind. Wahlweise ist diese Auffangwanne mit einem Abfluss für die Spülflüssigkeit ausgestattet.

Da der Innenumfang (UW) und damit auch die Öffnung eines Spülnapfs der erfindungsgemäßen Spülstation, durch die die Pipettiernadel in den Spülnapf zum Zwecke des Spülens eingeführt wird, möglichst klein zu halten ist, damit mit möglichst wenig Spülflüssigkeitsvolumen bei einer gegebenen Förderrate die gewünschte Reinigungswirkung erzielt wird, muss sichergestellt sein, dass die Pipettiernadel beim Spülvorgang in diese kleine Öffnung trifft.

Hierzu umfasst die erfindungsgemäße Pipettiervorrichtung neben der Spülstation noch eine Vorrichtung zum Bestimmen der exakten Position der Spitze der Pipettiernadel. Vorzugsweise handelt es sich hierbei um eine Messvorrichtung, die wenigstens einen elektrisch leitfähigen Messkörper umfasst, der in dem Arbeitsbereich des Pipettierarms angeordnet ist und von der Spitze einer elektrisch leitfähigen Pipettiernadel angesteuert werden kann. Bei entsprechender Ausrichtung der Pipettiernadelspitze bildet die Pipettiernadel mit dem Messkörper einen Kondensator, wobei die Pipettiernadel eine erste Elektrode des Kondensators bildet und der Messkörper eine zweite Elektrode des Kondensators bildet. Der Kondensator ist mit einer Kapazitätsmesseinrichtung zum Messen der elektrischen Kapazität des Kondensators verbunden.

Wird die Pipettiernadelspitze auf den Messkörper zu bewegt, geht dies mit einer Änderung der Kapazität des von Pipettiernadelspitze und Messkörper gebildeten Kondensators einher. Diese Kapazitätsänderung wird genutzt, um entweder die exakte Position der Pipettiernadelspitze auf der wenigstens einen horizontalen Arbeitsebene im Arbeitsbereich der Pipettiernadel zu bestimmen. Diese Positionsbestimmung kann auf unterschiedliche Weise erfolgen.

Beispielsweise kann die Positionsbestimmung anhand der vorgegebenen Lage des Meßkörpers erfolgen. Weist der Messkörper auf der wenigstens einen horizontalen Arbeitsebene eine kreisförmige Fläche mit einem Durchmesser, der im wesentlichen dem Durchmesser der Pipettiernadelspitze entspricht, auf. Kann die Pipettiernadelspitze auf diesen Meßkörper exakt ausgerichtet werden, wird eine bestimmte Kapazität gemessen, was die erreichte exakte Ausrichtung der Pipettiernadelspitze auf den Meßkörper und damit die exakte Position der Pipettiernadelspitze auf der entsprechenden Arbeitsebene anzeigt. Weicht die gemessene Kapazität von dem für diesen Fall erwarteten Wert ab, ist auch die Position der Pipettiernadelspitze anders als erwartet.

Will man genauer wissen, wie die Pipettiernadelspitze auf der Arbeitsebene ausgerichtet ist, kann man mehrere Messkörper vorsehen, die in einer Anordnung gruppiert sind. Beispielsweise können die mehreren Meßkörper in ein Feld aus Messkörpern auf der wenigstens einen horizontalen Arbeitsebene, die alle eine kreisförmige Fläche mit einem Durchmesser, der im wesentlichen dem Durchmesser der Pipettiernadelspitze entspricht, aufweisen und die alle separat an eine jeweils zugehörige Kapazitätsmessvorrichtung angeschlossen sind. Je nachdem, zwischen welchem Meßkörper und der Pipettiernadelspitze eine bestimmte Kapazität gemessen wird, ist die Position der Pipettiernadelspitze.

Noch etwas genauer kann die Positionsbestimmung anhand der Form eines Meßkörpers mit einer größeren Fläche, über die die Pipettiernadel bewegbar ist, und anhand der Geschwindigkeit der Bewegung der Pipettiernadel über den Messkörper und der Zeit, über die eine bestimmte Kapazität gemessen werden kann, oder anhand der bei der Bewegung über den Meßkörper zurück gelegten Strecke erfolgen.

Vorzugsweise weist die Messvorrichtung daher als zweite Elektrode neben der Pipettiernadel genau einen elektrisch leitfähigen Messkörper auf, der eine sich auf der wenigstens einen horizontalen Arbeitsebene erstreckende Oberfläche (F) aufweist, wobei die Oberfläche (F) ein Dreieck, ein Trapez, eine Raute oder ein Halbkreis ist.

Alternativ kann die Positionsbestimmung auch anhand der vorgegebenen Lage und Form des Meßkörpers und der von der Pipettiernadel bei der Bewegung in Richtung Meßkörper zurück gelegten Strecke oder der für das Erreichen des Meßkörpers bei gegebener Geschwindigkeit benötigten Zeit erfolgen. Beispielsweise kann der Messkörper ein elektrisch leitfähiger Draht sein, der auf der wenigstens einen horizontalen Arbeitsebene in einem vorgegebenen Winkel zu einer auf die horizontalen Arbeitsebene projezierten Bahn, auf der sich die Pipettiernadel durch den Arbeitsbereich bewegt, verläuft. Vorzugsweise ist zusätzlich ein zweiter Meßdraht vorgesehen, der auf der gleichen Ebene wie der erste Draht in einem Winkel zu dem ersten Draht, d.h. nicht parallel zu dem ersten Draht, verläuft.

Bei einer besonderen Ausführungsform umfaßt die Messvorrichtung wenigstens einen elektrisch leitfähigen Messkörper, der in einer Vertiefung in einer sich auf der wenigstens einen horizontalen Arbeitsebene im Arbeitsbereich erstreckenden Fläche angeordnet ist.

Vorzugsweise weist die Vertiefung in Draufsicht von oben einen dreiecks-, trapez- oder halbkreisförmigen Umfang auf, wobei der wenigstens eine Messkörper sich entlang des Umfangs der Vertiefung erstreckt und dabei einen Raum mit derselben Umfangsform, wie sie die Vertiefung aufweist umspannt. Hierdurch bildet der Messkörper zum inneren der Vertiefung hin eine Meßkante, an die eine in die Vertiefung eingeführte Pipettiernadel herangeführt werden kann.

Bei einer alternativen Ausführungsform der Erfindung kann die Messvorrichtung auch eine mit einem elektrischen Schalter verbundene Spannungsquelle und eine mit dem elektrischen Schalter verbundene Kapazitätsmesseinrichtung oder Strommesseinrichtung zum Feststellen eines elektrischen Stromflußes über den Schalter umfassen, wobei die Pipettiernadelspitze einen ersten Kontakt des Schalters bildet und der wenigstens eine elektrisch leitfähige Messkörper einen zweiten Kontakt des Schalters bildet. Allerdings muß hierfür an die Pipettiernadel eine Spannung angelegt werden, was mit einer Reihe von Nachteilen verbunden sein kann.

Bei einer weiteren alternativen Ausführungsform der Erfindung kann die Bestimmung der Position der Pipettiernadelspitze auch über eine Widerstandmessung erfolgen. Vorzugsweise ist hierfür statt einer Kapazitätsmesseinrichtung ein Widerstandsmessgerät zur Messung des Widerstands an die Pipettiernadel und an den Messkörper angeschlossen. Bei großer Entfernung zwischen Pipettiernadelspitze und Meßkörper ist der Widerstand entsprechend groß. Bewegt sich die Pipettiernadel auf den Meßkörper zu, nimmt der Widerstand ab. Wird die Pipettiernadel sogar auf Kontakt mit dem Meßkörper gefahren geht der Widerstand entsprechend gegen Null. Allerdings muß auch hierbei an die Pipettiernadel eine Spannung angelegt werden, was mit einer Reihe von Nachteilen verbunden sein kann.

Bevorzugt ist bei der vorliegenden Erfindung jedoch die weiter oben beschriebene Kapazitätsmessung über die Kapazitätsmesseinrichtung.

Zweckmäßigerweise ist die Kapazitätsmesseinrichtung mit einer Datenverarbeitungseinheit zum Berechnen der exakten Position der Pipettiernadelspitze anhand der oben diskutierten vorgegebenen oder gemessenen Daten verbunden. Bei einer bevorzugten Ausführungsform ist diese Datenverarbeitungseinheit in dem Analysator integriert.

Zweckmäßigerweise sind der elektrisch leitfähige Messkörper und die Pipettiernadel gegenüber der automatischen Pipettiervorrichtung elektrisch isoliert. Bei einer bevorzugten Ausführungsform ist die Pipettiernadel an Masse angeschlossen, um Störkapazitäten zu vermeiden. Bei einer weiteren bevorzugten Ausführungsform ist der Meßkörper an Masse angeschlossen, um Störkapazitäten zu vermeiden. Besonders bevorzugt haben sowohl die Pipettiernadel als auch der Meßkörper einen Masseanschluß.

Grundsätzlich kann der elektrisch leitfähige Messkörper aus jedem elektrisch leitfähigen Material bestehen. Vorzugsweise besteht der wenigstens eine elektrisch leitfähige Messkörper aus Metall.

Vorzugsweise ist die Spülstation der erfindungsgemäßen automatischen Pipettiervorrichtung austauschbar in dem Analysator angeordnet.

Bei einem erfindungsgemäßen Verfahren zum Spülen der Pipettiernadel einer automatischen Pipettiervorrichtung mit einer Spülstation der beschriebenen Art pumpt man bei einem vorgegebenen Querschnitt Q des Spülnapfablaufs eine bestimmte Spülflüssigkeit bei einer solchen Förderrate durch die Pipettiernadel in den Spülnapf, dass die Förderrate größer als die Ablaufrate der Spülflüssigkeit durch den Spülnapfablauf ist.

Vorzugsweise pumpt man die Spülflüssigkeit mit einer solchen Gesamtfördermenge durch die Pipettiernadel in den Spülnapf, dass die Spülflüssigkeit in dem Bereich zwischen der Außenwand der Pipettiernadel und der Innenwand des Spülnapfs wenigstens so weit steigt, dass eine Höhe erreicht wird, die mindestens der vorgegebenen maximalen Eintauchtiefe (T) der Pipettiernadel in eine Proben- oder Reagenzienflüssigkeit während eines automatischen Pipettiervorgangs entspricht.

Bei einem weiteren bevorzugten Verfahren pumpt man die Spülflüssigkeit mit einer solchen Gesamtfördermenge durch die Pipettiernadel in den Spülnapf, dass die Spülflüssigkeit bis zu einer Höhe steigt, die größer als die Höhe (H) des Spülnapfs ist, damit die Spülflüssigkeit über die Oberkante des Spülnapfs überlaufen kann.

Wie eingangs bereits erwähnt, ist die erfindungsgemäße Vorrichtung Bestandteil eines Analysators, der eines oder mehrere Elemente unter einem Pipettierarm, einer Antriebsvorrichtung für ein Flüssigkeitsbehälterkarussell, einer wärmeerzeugenden Vorrichtung, einer kälteerzeugenden Vorrichtung, einer optischen Messvorrichtung zum Bestimmen einer physikalischen oder chemischen Größe des Reaktionsgemisches und einer optoelektronischen Lesevorrichtung zum Lesen eines optoelektronisch lesbaren Codes aufweist.

Für Zwecke der ursprünglichen Offenbarung wird darauf hingewiesen, dass sämtliche Merkmale wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Weitere Merkmale oder Merkmalsgruppen sowie Beispiele für mögliche denkbare Merkmalskombinationen werden anhand der folgenden Beschreibung der beiliegenden Figuren offenbart bzw. veranschaulicht.

Hierbei zeigen:
- Figur 1: eine Vorrichtung für die automatisierte Analyse von Flüssigkeiten (Analysator) mit einer automatischen Pipettiervorrichtung mit einer Spülstation gemäß der vorliegenden Erfindung,
- Figur 2: eine schematische Darstellung der Spülstation für eine Pipettiernadel im Sinne der vorliegenden Erfindung,
- Figur 3: eine schematische Darstellung einer speziellen Ausführungsform einer erfindungsgemäßen Spülstation für die Pipettiernadel,
- Figur 4: eine schematische Darstellung einer speziellen Ausführungsform der erfindungsgemäßen Spülstation mit mehreren Spülnäpfen und
- Figur 5: eine erfindungsgemäße Pipettiervorrichtung mit einer Spülstation für die Pipettiernadel und einer Messvorrichtung zum Bestimmen der exakten Position der Pipettiernadelspitze.

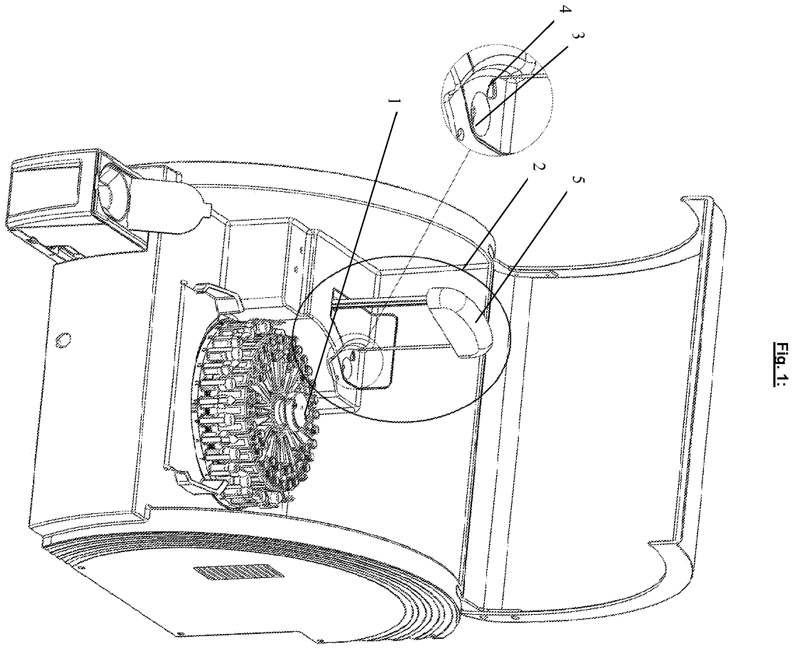

In Figur 1 ist eine Vorrichtung für die automatisierte Analyse von Flüssigkeiten (Analysator) dargestellt, die ein Karussell 1 für Flüssigkeitsbehälter und eine Pipettiervorrichtung 2 mit einem Pipettierarm 5 aufweist. Das Karussell 1 ist so angeordnet, dass es die Flüssigkeitsbehälter in den Arbeitsbereich des Pipettierarms 5 bewegen kann. Darüber hinaus ist im Arbeitsbereich des Pipettierarms 5 auch eine Spülstation 3 sowie eine Messvorrichtung 4 zum Bestimmen der exakten Position der Pipettiernadelspitze vorgesehen.

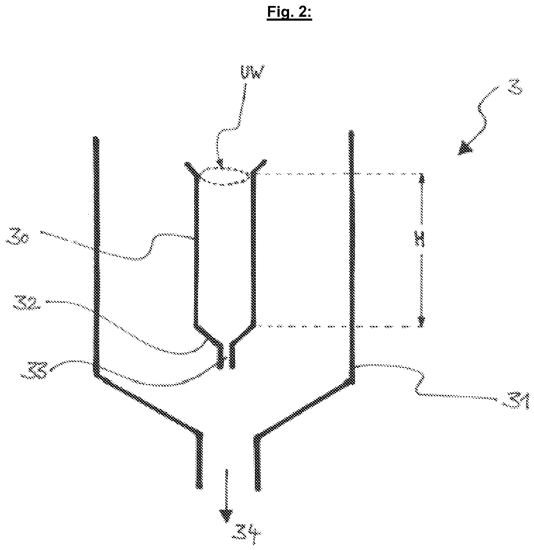

In Figur 2 ist eine Spülstation 3 im Sinne der vorliegenden Erfindung schematisch dargestellt. In einer Auffangwanne 31, in der ein Abfluss 34 vorgesehen ist, ist ein nach oben offener, hohlzylindrischer Spülnapf angeordnet, wobei die Höhe des Hohlzylinders durch H definiert ist. Der Hohlzylinder weist einen Innenumfang UW auf. An der Oberkante des Hohlzylinders ist der Spülnapf 30 nach außen hin etwas aufgeweitet. Der Spülnapfboden 32 ist bei dieser Ausführungsform nach unten hinten verjüngt ausgebildet und mündet in eine Spülnapfablauföffnung 33.

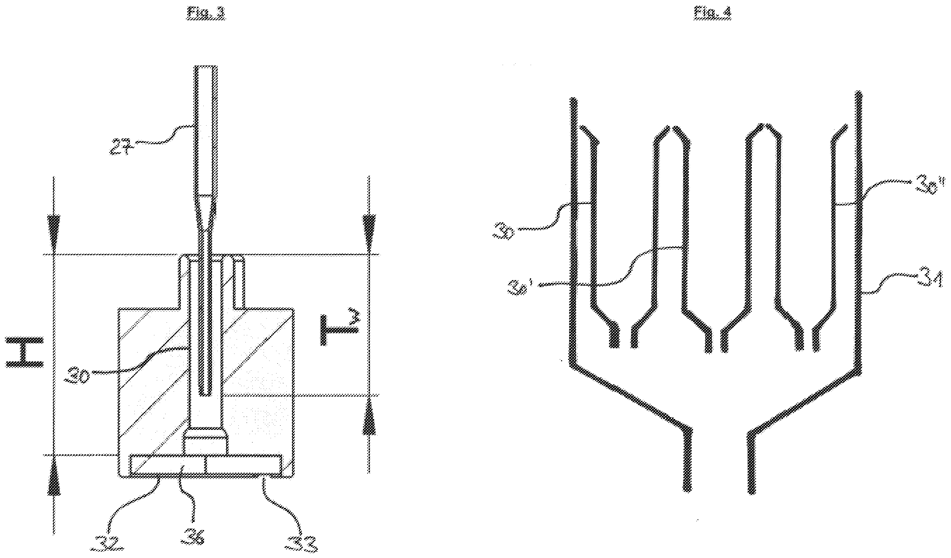

In Figur 3 ist eine spezielle Ausführungsform einer erfindungsgemäßen Spülstation dargestellt. Bei dieser Ausführungsform ist der Spülnapfboden so gestaltet, dass die Pipettiernadelspitze nicht unmittelbar über der Spülnapfablauföffnung 33 angeordnet werden kann, damit beim Ausstoßen der Spülflüssigkeit aus der Pipettiernadel der Spülflüssigkeitsstrahl nicht direkt in die Spülnapfablauföffnung 33 gepresst wird. Stattdessen gelangt die Spülflüssigkeit zunächst in eine Ablaufkammer 36, die zwischen dem Spülnapfboden 32 und dem hohlzylindrischen Abschnitt des Spülnapfs 30 angeordnet ist. Zum Spülnapfhohlzylinder hin weist die Ablaufkammer 36 einen Ablaufkammereinlaß 37 auf und nach unten hin die Spülnapfablauföffnung 33, die gegenüber dem Ablaufkammereinlaß 37 versetzt angeordnet ist.

In Figur 4 ist eine Spülstation 3 dargestellt, in deren Auffangwanne 33 drei Spülnäpfe 30, 30' und 30" in einer Reihe angeordnet sind.

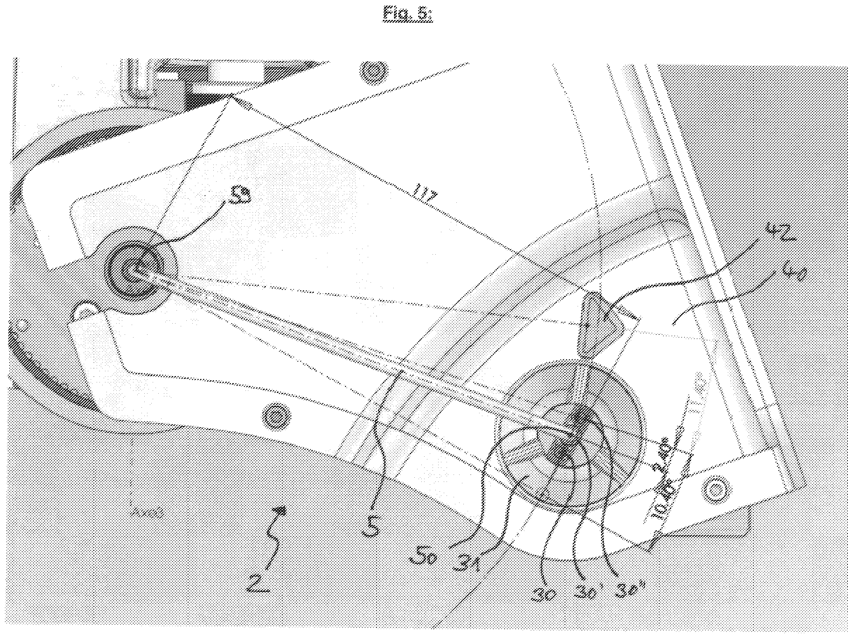

In Figur 5 ist eine erfindungsgemäße automatische Pipettiervorrichtung 2 mit einem um die Rotationsachse 59 schwenkbar angeordneten Pipettierarm 5, an dessen distalem Ende eine Aufnahmevorrichtung 50 für die Pipettiernadel angeordnet ist. Im Arbeitsbereich des Pipettierarms 5, d.h. auf einer mit einer Pipettiernadel ansteuerbaren Kreisbahn um die Rotationsachse 59, ist bei dieser Ausführungsform der automatischen Pipettiervorrichtung eine Spülstation mit drei in einer Reihe und in einer Auffangwanne 31 angeordneten Spülnäpfen 30, 30', 30" vorgesehen. Die Spülnäpfe 30, 30', 30" sind auf einer Geraden angeordnet, die die Kreisbahn, auf der sich die Pipettiernadelspitze bewegt, schneidet. Diese Gerade verläuft parallel zu einer Tangente der Kreisbahn, auf der sich die Pipettiernadelspitze bewegt.

Die Spülnäpfe sind so angeordnet, dass der Mittelpunkt des mittleren Spülnapfs 30' auf einer gedachten idealen Kreisbahn, auf der sich die Pipettiernadel bewegen soll, liegt. Der Mittelpunkt des Spülnapfs 30" liegt dagegen auf einer Kreisbahn, die einen von der idealen Kreisbahn abweichenden größeren Radius aufweist. Der Mittelpunkt des Spülnapfs 30 liegt auf einer Kreisbahn, die einen von der idealen Kreisbahn abweichenden kleineren Radius aufweist. Die Spülnäpfe sind bezogen auf eine Bewegung entlang der gedachten idealen Kreisbahn der Pipettiernadel hintereinander versetzt angeordnet.

Der Umfang der Spülnapföffnungen ist bei der gegebenen Anordnung der Spülnäpfe 30, 30', 30" so gewählt, dass die Pipettiernadel in jedem Fall in einen der Spülnäpfe 30, 30', 30" eingeführt werden kann, sofern sich die Pipettiernadelspitze auf einer Kreisbahn, die zwischen dem äußersten Rand des äußeren Spülnapfs 30" und dem innersten Rand des inneren Spülnapfs 30 liegt, bewegt.

Darüber hinaus ist bei dieser Pipettiervorrichtung ebenfalls auf einer Kreisbahn um die Rotationsachse 59, welche mit der Pipettiernadel angesteuert werden kann, ein Messkörper 42 einer Messvorrichtung zum Bestimmen der horizontalen Position der Pipettiernadelspitze vorgesehen. Der Meßkörper 42 ist in einer dreieckförmigen Vertiefung in der Arbeitsfläche 40 vorgesehen. Der Meßkörper 42 hat ebenfalls den Umfang eines Dreiecks, da er sich entlang des Umfangs der Vertiefung erstreckt und dabei einen Raum mit derselben Umfangsform, wie sie die Vertiefung aufweist umspannt. Der Messkörper 42 bildet hierbei eine Meßkante, an die eine in die Vertiefung eingeführte Pipettiernadel herangeführt werden kann.

Der Messkörper 42 und die elektrisch leitfähige Pipettiernadel bilden, wenn sie aufeinander ausgerichtet sind, einen Kondensator, der mit einer Kapazitätsmesseinrichtung verbunden ist. Für die Messung wird die Pipettiernadel in den vom Messkörper 42 umspannten Bereich eingeführt und so lange in eine Richtung bewegt, bis eine Kapazität bestimmter Größe festgestellt wird. Alternativ kann der die Pipettiernadel auf auch Kontakt gefahren werden, da heißt so weit, bis sie auf die Kante des Messkörpers stößt. Anschließend wird die Pipettiernadel in die entgegengesetzte Richtung bewegt, bis eine Kapazität bestimmter Größe festgestellt wird bzw. bis sie die Kante des Messkörpers berührt. Aus den Signalen und anhand der zwischen den beiden Endpunkten zurück gelegten Strecke kann eine im Analysator vorgesehene Datenverarbeitungseinheit die exakte horizontale Position der Pipettiernadelspitze feststellen. Etwas genauer kann festgestellt werden, auf welcher exakten Kreisbahn sich die Pipettiernadelspitze bewegt. Durch diese Information kann eine Auswahl getroffen werden, in welchen der Spülnäpfe 30, 30', 30" die Pipettiernadelspitze am besten eingeführt wird, um die gewünschte Spülwirkung zu erreichen.

### Bezugszeichen

- 1: Karussell für Flüssigkeitsbehälter
- 2: Pipettiervorrichtung
- 3: Spülstation
- 5: Pipettierarm
- 27: Pipettiernadel
- 30: Spülnapf
- 31: Auffangwanne
- 32: Spülnapfboden
- 33: Spülnapfablauföffnung
- 34: Abfluss
- 35: Spülnapfanordnung
- 36: Ablaufkammer
- 37: Ablaufkammereinlaß
- 41: Pipettiernadelspitze
- 42: Messkörper

## Patentansprüche

1. Automatische Pipettiervorrichtung (2) mit einer Spülstation (3) zum Spülen der Pipettiernadel (27) der Pipettiervorrichtung (2), wobei in der Spülstation (3) eine Auffangwanne (31) vorgesehen ist, in oder über der wenigstens ein nach oben offener Spülnapf (30) angeordnet ist, wobei
a) der wenigstens eine Spülnapf (30) eine Höhe (H) aufweist, die mindestens einer vorgegebenen maximalen Eintauchtiefe (T) der Pipettiernadel (27) in eine Proben- oder Reagenzienflüssigkeit während eines automatischen Pipettiervorgangs entspricht,
b) der wenigstens eine Spülnapf (30) einen Innenumfang (UW) aufweist, der größer als der Außenumfang (UP) der Pipettiernadel (27) ist,
c) der wenigstens eine Spülnapf (30) an seinem unteren Ende einen Spülnapfboden (32) und eine in dem Spülnapfboden (32) angeordnete Spülnapfablauföffnung (33) aufweist,
d) der wenigstens eine Spülnapf einen hohlzylindrischen Abschnitt und eine Ablaufkammer (36) aufweist,
e) die Ablaufkammer zwischen dem Spülnapfboden (32) und dem hohlzylindrischen Abschnitt des Spülnapfes (30) angeordnet ist,
f) die Ablaufkammer (36) zum hohlzylindrischen Abschnitt des Spülnapfes hin einen Ablaufkammereinlass (37) aufweist,
g) die im Spülnapfboden (32) angeordnete Spülnapfablauföffnung (33) gegenüber dem Ablaufkammereinlass (37) so versetzt angeordnet ist, dass beim Ausstoßen der Spülflüssigkeit aus der Pipettiernadel der Spülflüssigkeitsstrahl nicht direkt in die Spülnapfablauföffnung (33) gepresst wird,
h) bei einer gegebenen Förderrate (Volumen pro Zeit) einer bestimmten Spülflüssigkeit durch die Pipettiernadel (27) in den Spülnapf (30) der hydraulische Ablaufwiderstand des Spülnapfablaufs (33) so gewählt ist, dass die Förderrate der Spülflüssigkeit größer als die Ablaufrate (Volumen pro Zeit) der Spülflüssigkeit durch den Spülnapfablauföffnung (33) ist, und
i) die Auffangwanne (31) mit einem Abfluss (34) für die Spülflüssigkeit ausgestattet ist, die aus der Spülnapfablauföffnung (33) des wenigstens einen Spülnapfs (30) oder über die Oberkante des Spülnapfs austritt.

2. Pipettiervorrichtung (2) nach Anspruch 1, **dadurch gekennzeichnet, dass** bei einer gegebenen Förderrate einer bestimmten Spülflüssigkeit durch die Pipettiernadel (27) in den Spülnapf (30) der hydraulische Ablaufwiderstand des Spülnapfablaufs (33) oder das Verhältnis UW/UP und der Querschnitt Q des Spülnapfablaufs (33) so gewählt sind, dass bei hinreichender Gesamtfördermenge an Spülflüssigkeit in dem Bereich zwischen der Außenwand der Pipettiernadel (27) und der Innenwand des Spülnapfs (30) in der Spülflüssigkeit turbulente Strömung auftritt.

3. Pipettiervorrichtung (2) nach einem der Ansprüche 1 oder 2, **dadurch gekennzeichnet, dass** der hydraulische Ablaufwiderstand des Spülnapfablaufs (33) oder das Verhältnis UW/UP und Q so gewählt sind, dass bei einer gegebenen Förderrate einer bestimmten Spülflüssigkeit in dem Bereich zwischen der Außenwand der Pipettiernadel (27) und der Innenwand des Spülnapfs (30) in der Spülflüssigkeit eine Reynolds-Zahl von mindestens 2500 erreicht wird.

4. Pipettiervorrichtung (2) nach einem der Ansprüche 1 bis 3, **dadurch gekennzeichnet, dass** der hydraulische Ablaufwiderstand des Spülnapfablaufs (33) oder das Verhältnis UW/UP und Q so gewählt sind, dass bei einer gegebenen Förderrate einer bestimmten Spülflüssigkeit in dem Bereich zwischen der Außenwand der Pipettiernadel (27) und der Innenwand des Spülnapfs (30) in der Spülflüssigkeit eine Reynolds-Zahl von mindestens 100 000 erreicht wird.

5. Pipettiervorrichtung (2) nach einem der Ansprüche 1 bis 4, **dadurch gekennzeichnet, dass** der Außenumfang (UP) der Pipettiernadel (27) in dem Bereich von 1 mm bis 4 mm liegt.

6. Pipettiervorrichtung (2) nach einem der Ansprüche 1 bis 5, **dadurch gekennzeichnet, dass** der Innenumfang (UW) des Spülnapfs (30) in dem Bereich von 1,5 mm bis 15 mm liegt.

7. Pipettiervorrichtung (2) nach einem der Ansprüche 1 bis 6, **dadurch gekennzeichnet, dass** das Verhältnis UW/UP in dem Bereich von 1,5 bis 5 liegt.

8. Pipettiervorrichtung (2) nach einem der Ansprüche 1 bis 7, **dadurch gekennzeichnet, dass** sie für die aus dem wenigstens einen Spülnapf austretende Spülflüssigkeit eine Auffangwanne (31) umfasst, in oder über der der Spülnapf (30) oder die Spülnäpfe (30, 30', 30") angeordnet ist/sind, wobei die Auffangwanne (31) wahlweise mit einem Abfluss (34) ausgestattet ist.

9. Pipettiervorrichtung (2) nach einem der Ansprüche 1 bis 8, **dadurch gekennzeichnet, dass** sie eine Vorrichtung zum Bestimmen der exakten Position der Spitze der Pipettiernadel (27) umfasst.

10. Austauschbare Spülstation (3) zum Spülen der Pipettiernadel (27) einer automatischen Pipettiervorrichtung (2), wobei die Spülstation (3) die Merkmale der Spülstation (3) nach einem der Ansprüche 1 bis 9 aufweist.

11. Automatisierte Analysevorrichtung mit einer Pipettiervorrichtung (2) nach einem der Ansprüche 1 bis 9 oder mit einer automatischen Pipettiervorrichtung (2) und mit einer Spülstation (3) nach Anspruch 10, wobei die automatisierte Analysevorrichtung zusätzlich ein oder mehrere Elemente unter einem Analyserotor, einer Wärme erzeugenden Vorrichtung, einer Kälte erzeugenden Vorrichtung, einer optischen Messvorrichtung und einer optoelektronischen Lesevorrichtung zum Lesen eines optoelektronisch lesbaren Codes aufweist.

12. Verfahren zum Spülen der Pipettiernadel (27) einer automatischen Pipettiervorrichtung (2) mit einer Spülstation (3) nach einem der Ansprüche 1 bis 11, bei dem man bei einem vorgegebenen Querschnitt Q des Spülnapfablaufs (33) eine bestimmte Spülflüssigkeit bei einer solchen Förderrate (Volumen pro Zeit) durch die Pipettiernadel (27) in den Spülnapf (30) pumpt, dass die Förderrate größer als die Ablaufrate (Volumen pro Zeit) der Spülflüssigkeit durch den Spülnapfablauf (33) ist.

13. Verfahren nach Anspruch 12, bei dem man die Spülflüssigkeit mit einer solchen Gesamtfördermenge durch die Pipettiernadel (27) in den Spülnapf (30) pumpt, dass die Spülflüssigkeit in dem Bereich zwischen der Außenwand der Pipettiernadel (27) und der Innenwand des Spülnapf (30) wenigstens so weit steigt, bis eine Höhe erreicht wird, die mindestens der vorgegebenen maximalen Eintauchtiefe (T) der Pipettiernadel (27) in eine Proben- oder Reagenzienflüssigkeit während eines automatischen Pipettiervorgangs entspricht.

14. Verfahren nach Anspruch 13, bei dem man die Spülflüssigkeit mit einer solchen Gesamtfördermenge durch die Pipettiernadel (27) in den Spülnapf (30) pumpt, dass die Spülflüssigkeit bis zu einer Höhe steigt, die größer als die Höhe (H) des Spülnapfs (30) ist, damit die Spülflüssigkeit über die Oberkante des Spülnapfs (30) überlaufen kann.

## Claims

1. Automatic pipetting device (2) with a rinsing station (3) for rinsing the pipetting needle (27) of the pipetting device (2), wherein in the rinsing station (3) a drip tray (31) is provided, in or above which at least one rinsing bowl (30), open at the top, is arranged, wherein
a) the at least one rinsing bowl (30) has a height (H) that corresponds to at least a specified maximum depth of immersion (T) of the pipetting needle (27) in a sample or reagent liquid during an automatic pipetting operation,
b) the at least one rinsing bowl (30) has an inner circumference (UW) that is larger than the outer circumference (UP) of the pipetting needle (27),
c) at its bottom end the at least one rinsing bowl (30) has a rinsing bowl bottom (32) and a rinsing bowl drain opening (33) arranged in the bottom (32) of the rinsing bowl,
d) the at least one rinsing bowl has a hollow cylindrical section and a drain chamber (36),
e) the drain chamber is arranged between the bottom (32) of the rinsing bowl and the hollow cylindrical section of the rinsing bowl (30),
f) towards the hollow cylindrical section of the rinsing bowl, the drain chamber (36) has a drain chamber inlet (37),
g) the rinsing bowl drain opening (33) arranged in the bottom (32) of the rinsing bowl is arranged offset relative to the drain chamber inlet (37) such that, during expulsion of the rinsing liquid from the pipetting needle, the stream of rinsing liquid is not forced directly into the rinsing bowl drain opening (33),
h) at a given feed rate (volume in unit time) of a specified rinsing liquid through the pipetting needle (27) into the rinsing bowl (30), the hydraulic discharge resistance of the rinsing bowl drain (33) is selected so that the feed rate of the rinsing liquid is greater than the discharge rate (volume in unit time) of the rinsing liquid through the rinsing bowl drain opening (33), and
i) the drip tray (31) is provided with a drain (34) for the rinsing liquid that flows out of the rinsing bowl drain opening (33) of the at least one rinsing bowl (30) or over the upper edge of the rinsing bowl.

2. Pipetting device (2) according to claim 1, **characterized in that**, at a given feed rate of a specified rinsing liquid through the pipetting needle (27) into the rinsing bowl (30), the hydraulic discharge resistance of the rinsing bowl drain (33) or the UW/UP ratio and the cross-section Q of the rinsing bowl drain (33) are selected so that, with a sufficient total feed amount of rinsing liquid, turbulent flow occurs in the rinsing liquid in the region between the outside wall of the pipetting needle (27) and the inside wall of the rinsing bowl (30).

3. Pipetting device (2) according to one of claims 1 or 2, **characterized in that** the hydraulic discharge resistance of the rinsing bowl drain (33) or the UW/UP ratio and Q are selected so that, at a given feed rate of a specified rinsing liquid, a Reynolds number of at least 2500 is reached in the rinsing liquid in the region between the outside wall of the pipetting needle (27) and the inside wall of the rinsing bowl (30).

4. Pipetting device (2) according to one of claims 1 to 3, **characterized in that** the hydraulic discharge resistance of the rinsing bowl drain (33) or the UW/UP ratio and Q are selected so that, at a given feed rate of a specified rinsing liquid, a Reynolds number of at least 100,000 is reached in the rinsing liquid in the region between the outside wall of the pipetting needle (27) and the inside wall of the rinsing bowl (30).

5. Pipetting device (2) according to one of claims 1 to 4, **characterized in that** the outer circumference (UP) of the pipetting needle (27) is in the range from 1 mm to 4 mm.

6. Pipetting device (2) according to one of claims 1 to 5, **characterized in that** the inner circumference (UW) of the rinsing bowl (30) is in the range from 1.5 mm to 15 mm.

7. Pipetting device (2) according to one of claims 1 to 6, **characterized in that** the UW/UP ratio is in the range from 1.5 to 5.

8. Pipetting device (2) according to one of claims 1 to 7, **characterized in that**, for the rinsing liquid flowing out of the at least one rinsing bowl, it comprises a drip tray (31), in or above which the rinsing bowl (30) or the rinsing bowls (30, 30', 30") is/are arranged, wherein the drip tray (31) optionally is provided with a drain (34).

9. Pipetting device (2) according to one of claims 1 to 8, **characterized in that** it comprises a device for determining the exact position of the tip of the pipetting needle (27).

10. Exchangeable rinsing station (3) for rinsing the pipetting needle (27) of an automatic pipetting device (2), wherein the rinsing station (3) has the features of the rinsing station (3) according to one of claims 1 to 9.

11. Automated analysis device with a pipetting device (2) according to one of claims 1 to 9 or with an automatic pipetting device (2) and with a rinsing station (3) according to claim 10, wherein the automated analysis device additionally has one or more of the following elements: an analysis rotor, a device producing heat, a device producing cold, an optical measuring device and an optoelectronic reading device for reading an optoelectronically readable code.

12. Method of rinsing the pipetting needle (27) of an automatic pipetting device (2) with a rinsing station (3) according to one of claims 1 to 11, in which, for a given cross-section Q of the rinsing bowl drain (33), a specified rinsing liquid is pumped through the pipetting needle (27) into the rinsing bowl (30) at a feed rate (volume in unit time) such that the feed rate is greater than the discharge rate (volume in unit time) of the rinsing liquid through the rinsing bowl drain (33).

13. Method according to claim 12, in which the rinsing liquid is pumped through the pipetting needle (27) into the rinsing bowl (30) with a total feed amount such that, in the region between the outside wall of the pipetting needle (27) and the inside wall of the rinsing bowl (30), the rinsing liquid rises at least until a height is reached that corresponds to at least the specified maximum depth of immersion (T) of the pipetting needle (27) in a sample or reagent liquid during an automatic pipetting operation.

14. Method according to claim 13, in which the rinsing liquid is pumped through the pipetting needle (27) into the rinsing bowl (30) with a total feed amount such that the rinsing liquid rises to a height that is greater than the height (H) of the rinsing bowl (30), so that the rinsing liquid can overflow over the upper edge of the rinsing bowl (30).

## Revendications

1. Dispositif de pipetage (2) automatisé avec une station de rinçage (3) pour rincer l'aiguille de pipetage (27) du dispositif de pipetage (2), dans la station de rinçage (3) un receveur (31) étant prévu dans lequel ou au-dessus duquel au moins une cuvette de rinçage (30) ouverte vers le haut est disposée,
a) ladite au moins une cuvette de rinçage (30) présentant une hauteur (H) qui correspond au moins à une profondeur de plonge (T) maximale de l'aiguille de pipetage (27) dans un liquide d'échantillon ou de réactif, pendant une action de pipetage automatisée,
b) ladite au moins une cuvette de rinçage (30) présentant un pourtour intérieur (UW) qui est supérieur au pourtour extérieur (UP) de l'aiguille de pipetage (27),
c) ladite au moins une cuvette de rinçage (30) comprenant, à son extrémité inférieure, un fond de cuvette de rinçage (32) et une ouverture d'écoulement de cuvette de rinçage (33),
d) ladite au moins une cuvette de rinçage comprenant une partie cylindrique creuse et une chambre d'écoulement (36),
e) la chambre d'écoulement étant disposée entre le fond de cuvette de rinçage (32) et la partie cylindrique creuse de la cuvette de rinçage (30),
f) la chambre d'écoulement (36) comprenant, du côté de la partie cylindrique creuse de la cuvette de rinçage, une entrée de chambre d'écoulement (37),
g) l'ouverture d'écoulement de cuvette de rinçage (33) disposée dans le fond de cuvette de rinçage (32) étant déportée par rapport à l'ouverture de chambre d'écoulement (37) de façon que, lors d'une éjection du liquide de rinçage de l'aiguille de pipetage, le jet de liquide rinçage ne soit pas pressé directement dans l'ouverture d'écoulement de cuvette de rinçage (33),
h) pour un débit donné (volume par temps) d'un certain liquide de rinçage par l'aiguille de pipetage (27) dans la cuvette de rinçage (30), la résistance hydraulique d'écoulement étant choisie de façon que le débit de liquide de rinçage soit supérieur au débit d'écoulement (volume par temps) du liquide de rinçage par l'ouverture d'écoulement de cuvette de rinçage (33), et
i) le receveur (31) étant pourvu d'un écoulement (34) pour le liquide de rinçage qui sort par l'ouverture d'écoulement de cuvette de rinçage (33) de ladite au moins une cuvette de rinçage (30) ou par le bord supérieur de la cuvette de rinçage.

2. Dispositif de pipetage (2) selon la revendication 1, **caractérisé en ce que** par un débit donné d'un liquide de rinçage déterminé au travers d'une aiguille de pipetage (27) dans la cuvette de rinçage (30), la résistance hydraulique d'écoulement de la cuvette de rinçage (33) ou le rapport UW/UP et la section transversale Q de la cuvette de rinçage (33) sont choisis de façon telle qu'il se produit un écoulement turbulent lors d'un volume de transport total suffisant en liquide de rinçage dans la zone entre la paroi extérieure de l'aiguille de pipetage (27) et la paroi intérieure de la cuvette de rinçage (30) dans le liquide de rinçage.

3. Dispositif de pipetage (2) selon l'une des revendications 1 ou 2, **caractérisé en ce que** la résistance hydraulique d'écoulement de l'écoulement de cuvette de rinçage (33) ou le rapport UW/UP et Q sont choisis de façon telle que, dans le liquide de rinçage, un nombre de Reynolds d'au moins 2500 est atteint pour un débit donné d'un liquide de rinçage déterminé dans la zone entre la paroi extérieure de l'aiguille de pipetage (27) et la paroi intérieure de la cuvette de rinçage (30).

4. Dispositif de pipetage (2) selon l'une des revendications 1 à 3, **caractérisé en ce que** la résistance hydraulique d'écoulement de l'écoulement de cuvette de rinçage (33) ou le rapport UW/UP et Q sont choisis de façon telle que, dans le liquide de rinçage, un nombre de Reynolds d'au moins 100 000 est atteint pour un débit donné d'un liquide de rinçage déterminé dans la zone entre la paroi extérieure de l'aiguille de pipetage (27) et la paroi intérieure de la cuvette de rinçage (30).

5. Dispositif de pipetage (2) selon l'une des revendications 1 à 4, **caractérisé en ce que** le pourtour extérieur (UP) de l'aiguille de pipetage (27) est compris dans la plage de 1 mm à 4 mm.

6. Dispositif de pipetage (2) selon l'une des revendications 1 à 5, **caractérisé en ce que** le pourtour intérieur (UW) de la cuvette de rinçage (30) est compris dans la plage de 1,5 mm à 15 mm.

7. Dispositif de pipetage (2) selon l'une des revendications 1 à 6, **caractérisé en ce que** le rapport UW/UP est compris dans la plage de 1,5 à 5.

8. Dispositif de pipetage (2) selon l'une des revendications 1 à 7, **caractérisé en ce qu'**il comprend un receveur (31) pour le liquide de rinçage s'écoulant de ladite au moins une cuvette de rinçage, dans lequel ou au-dessus duquel la cuvette de rinçage (30) ou les cuvettes de rinçage (30, 30', 30") est ou sont disposé(s), le receveur (31) étant pourvu, selon le choix, d'un écoulement (34).

9. Dispositif de pipetage (2) selon l'une des revendications 1 à 8, **caractérisé en ce qu'**il comprend un dispositif pour déterminer la position exacte de la pointe de l'aiguille de pipetage (27).

10. Station de rinçage interchangeable (3) pour le rinçage d'une aiguille de pipetage (27) d'un dispositif de pipetage (2) automatique, la station de rinçage (3) comportant les caractéristiques de la station de rinçage (3) selon une des revendications 1 à 9.

11. Dispositif d'analyse automatisé comprenant un dispositif de pipetage (2) selon une des revendications 1 à 9 ou un dispositif de pipetage (2) automatique ou une station de rinçage (3) selon la revendication 10, le dispositif d'analyse automatisé comprenant en plus un ou plusieurs éléments parmi un rotor d'analyse, un dispositif générant de la chaleur, un dispositif générant du froid, un dispositif de mesure optique et un dispositif de lecture opto-électronique pour la lecture d'un code opto-électroniquement lisible.

12. Procédé pour rincer l'aiguille de pipetage (27) d'un dispositif de pipetage (2) automatique avec une station de rinçage (3) selon une des revendications 1 à 11, selon lequel, pour une section transversale Q donnée de l'écoulement de cuvette de rinçage (33), on pompe un liquide de rinçage déterminé avec un tel débit (volume par temps) à travers l'aiguille de pipetage (27) dans la cuvette de rinçage (30) que le débit soit plus grand que le débit d'écoulement (volume par temps) du liquide de rinçage à travers l'écoulement de cuvette de sortie (33).

13. Procédé selon la revendication 12, selon lequel on pompe le liquide de rinçage à travers l'aiguille de pipetage (27) dans la cuvette de rinçage (30) avec une telle quantité totale que le liquide de rinçage, dans la zone entre la paroi extérieure de l'aiguille de rinçage (27) et la paroi intérieure de la cuvette de rinçage (30) monte au moins aussi loin jusqu'à atteindre une hauteur qui correspond au moins à la profondeur de plongée (T) maximale déterminée de l'aiguille de rinçage (27) dans un liquide d'échantillon ou à réactifs pendant un processus de pipetage automatique.

14. Procédé selon la revendication 13, selon lequel on pompe le liquide de rinçage à travers l'aiguille de pipetage (27) dans la cuvette de rinçage (30) avec une telle quantité totale que le liquide de rinçage monte jusqu'à une hauteur qui est supérieure à la hauteur (H) de la cuvette de rinçage (30) afin que le liquide de rinçage puisse déborder du bord supérieur de la cuvette de rinçage (30).
